(19) Europäisches Patentamt
European Patent Office
Office européen des brevets

(11) EP 4 227 674 A1

# (12) EUROPEAN PATENT APPLICATION

(43) Date of publication:
**16.08.2023 Bulletin 2023/33**

(21) Application number: **22000032.7**

(22) Date of filing: **14.02.2022**

(51) International Patent Classification (IPC):
***G01N 23/00** (2006.01)* ***G01N 37/00** (2006.01)*

(52) Cooperative Patent Classification (CPC):
**G01N 23/00; G01N 37/005**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Bauer, Volker**
**4020 Linz (AT)**

(72) Inventor: **Bauer, Volker**
**4020 Linz (AT)**

## (54) DRIVING TRANSITIONS BETWEEN QUANTUM STATES

(57) The folowing pages are for both publication and patent and are for exploration of a physical principle that is to be claimed for patent in two classes A) and B) in the claim with the same title and AnmNr EP 22 000 032.7

EP 4 227 674 A1

## Description

The following pages are for both publication and patent and are for explanation of a physical principle that is to be claimed for patent in two classes A) and B) in the claim with the same title and Anmeldenummer EP22 000 032.7.

In the first description of this Anmeldenummer EP22 000 032.7 the several Latin numbers don't denote branches where the content of a Latin number is stand alone with respect to other numbers but are subjects and information shared also for other numbers.

This is implicitely obvious in a way that the content of the several parts can not even be understood without the others but it has been understood. The Latin numbers are obviously only for navigating in the text and don't separate totally distinct parts.

V is an immediate consequence of IV if this is due to an experiment so that there is a (cor)relation. On the other hand the fifteen explicite at-least-claims can not be presumed to be claimed only for II. It is obvious that these are the at-least-claims for all the content of the text.

It must be stressed most that the start and the end are valid for all the rest:
$E_{AB}$ is there without stressing a frequency (could be virtual as in this text).

Condition on wavelength: $E^2 = m^2 c^4 + p^2 c^2$ and $p^> = h/2\pi\ k^>$ are well known as $\lambda = 2\pi /k$ is a general and basic equation of Physics. The condition on the wavelength is therefore in the first description suggested for all parts as a second view if $E_{AB} > E_{H2} > E_{H1}$ or $\lambda_{AB} < \lambda_{H2} < \lambda_{H1}$ and is here in this abstract and claim EP22 000 032.7 stated explicitely.

The whole text is easily to be understood as a synthesis of all parts with examples in addition so that the parts of the several Latin numbers can not at all be stand alone.

In the following these letters and concepts are the same anywhere:

| | | | |
|---|---|---|---|
| l, m', n $\in$ | | $l > n$ | |
| r, s $\in$ | Q | $r > 1, s > 1$ | |
| $r = l_r / j_r$ | $s = l_s / j_s$ | $l_r > j_r$ , | $l_s > j_s$ |

with little natural numbers l, m', n, $l_r$, $j_r$, $l_s$, $j_s$ then best.

| | |
|---|---|
| E | energy |
| v | frequency |
| $\lambda$ | wavelength |
| $p^>$ , p | momentum |
| $k^>$, k | vector of the wave as wave particle duality |
| m | mass |
| c | velocity of light |
| h, | Plank's constant |

| | | |
|---|---|---|
| $E_{H1} = E_1$, | $E_{H2} = E^2$ | helper energies |
| $E_3 = E_{ch} = E_{AB}$ | | energy to work with |
| $\lambda_{H1} = \lambda_1$ | $X_{H2} = \lambda_2$ | helper wavelengths |
| $X_3 = \lambda_{ch}$ | | wavelength to work with in case energy driving |
| $\lambda_3 = \lambda_m$ | | wavelength to work with in case wavelength driving |

Indices:

| | | |
|---|---|---|
| t | total | as $E_t$ |
| N | nucleus | as $E_N$ |
| A | atom | as $E_A$ |
| MM | (macro)molecule | as $E_{MM}$ |
| SSTO | solid state object | as $E_{SSTO}$ |
| kin | kinetic | as $E_{kin}$ |
| Tr | transition | as $E_{Tr}$ |

(continued)

| | | |
|---|---|---|
| P | particle | as $E_P$ |
| St or Start | Start | as $E_{NSt}$ |
| End | End | as $E_{NEnd}$ |

The following considerations don't need a special device with constraints or preconditions on geometry except what is explained: Two beams in the same direction for driving the result particles of a transition in a direction, see the part in question of this abstract.

The general principle is first that a photon or phonon radiation with energy $E_{H2} = h\ V_{H2}$ and frequency $V_{H2}$ can cause a transition between quantum states to be of higher transition probability as without any application of the photons or phonons if one energy difference or the sum of energy differences $E_{ch}$ of the result of the transition in question is $E_{ch} = \eta\ E_{H2} = n\ h\ V_{H2}$ i.e.: an energy or sum of energies $E_{ch}$ as a multiple of the energy applied.

It will be explained later what energies are allowed: The resulting energies have been stressed but for nuclei (so also $\alpha$-particles, He-nuclei), atoms, (macro)molecules and solid state objects the difference $\Delta E$ of the state before and after are also possible as well as the energy of the transition.

It is also stated that $E_{ch}$ could be a multiple s > 1 in Q of the energy applied, with more impact if s is as a division of low natural numbers $l_s > j_s$

$$s = l_s / j_s$$

$$E_{ch} = s\ E_{H2} = s\ h\ \nu_{H2}$$

If the chosen transition is like sending out a photon and the chosen energy $E_{ch}$ is the energy of this photon, $E_{ch} = h\ \nu_{ch}$ , with $c = \nu_{ch}\ \lambda_{ch}$ , then the wavelength $\lambda_{ch}$ is real. Therefore we have a real frequency $\nu_{ch}$ and a real wavelength $\lambda_{ch}$ as the properties of the photon of the chosen transition.

The same for phonons with speed c.

To drive a transition here always means to increase the probability of this transition as explained.

If the transition to be driven has a particle (with mass) in velocity < c as a result then $E_{ch}$ must be a property (energy) of one of these particles or a property of the left nucleus, atom, (macro)molecule or solid state object after the transition or a sum of these energies.

For nuclei, atoms, (macro)molecules or solid state objects also the energy difference before and after the transition can be chosen in total energy, kinetic energy or energy in v=0 according to $me^2$, $\alpha$-particles are He-nuclei, therefore nuclei and can also be seen as a successor of the interaction (transition) starting in the origin quantum state $\overline{A}$. $e^-$, $e^+$, $v_e$, $\underline{v_e}$, photons $\gamma$ or phonons lack the part of the strong interaction in their quantum state after and can not be seen as successors but only as sent out particles.

The energy of the transition can also be chosen as $E_{ch}$ but it must be a unique energy. If a photon is emitted from a (macro)molecule only the photon will take a considerable energy according to the conservation of momentum. This can even be the case for an emitted Auger-electron. This means it is not possible to drive Auger-$e^-$ with the total energy difference of the $e^-$ changing the orbital. For chosen K and L orbitals according to fine and hyperfine structure the energy $E_{LK}$ can almost be taken by a single photon with $E_{LK} = h\ V_{LK}$ . If the energy $E_{LK}$ is driven this is the case because there is a real wavelength as an attractor of a second kind (almost).

If a photon is sent out then the nucleus, atom, (macro)molecule or solid state object left also has a change of momentum and therefore takes an energy change, this explains the "almost" in the two sentences before. But in many cases this is to less to be observed because of the mass difference to the nucleus, atom, (macro)molecule or solid state object left.

If this is not the case then in general the $\Delta E_N$, $\Delta E_A$, $\Delta E_{MM}$, $\Delta$Essro, $E\gamma$, $E_{Tr}$, can be $E_{ch}$.

$$E_{Tr} = E_\gamma + \Delta E_N + (\ \Delta E_A + \Delta E_{MM} + \Delta E_{SSTO}\ )$$

For nuclei, the $\Delta E$ in brackets can be considered for accuracy summing up to the left obligatory but leaving out to the right possible.

$$E_{Tr} = E_\gamma + \Delta E_A\ (\ + \Delta E_{MM} + \Delta E_{SSTO}\ )$$

For atoms, the $\Delta E$ in brackets as before. Hyperfine structure is considered as a part of $\Delta E_A$ .

$$E_{Tr} = E_\gamma + \Delta E_{MM} \; ( + \Delta E_{SSTO} )$$

For (macro)molecules, $\Delta E_{SSTO}$ can be considered for accuracy.

$$E_{Tr} = E_\gamma + \Delta E_{SSTO}$$

For solid state objects, this for phonons also.

On the other hand also the total energy, the kinetic energy or the energy according to $mc^2$ in v=0 of the nucleus, atom, (macro)molecule or solid state object after the transition in the resulting quantum state can be taken as $E_{ch}$. A sum of these is possible as well as a sum of some $\Delta E$, a mixed sum is also left to the experiment.

in case of other particles (with mass) in velocity < c there is a virtual frequency $\nu_{ch}$ and a virtual wavelength $\lambda_{ch}$ according to the chosen energy $E_{ch}$. The chosen energy $E_{ch}$ should then be the total energy, the kinetic energy or the energy according to $mc^2$ in v=0 of the sent out particles or the rest of the nucleus, atom, (macro)molecule or solid state object or a partial mixed sum of these.

In this case of other particles (with mass) in speed < c also:

$$E_{Tr} = E_p + \Delta E_N \; ( + \Delta E_A + \Delta E_{MM} + \Delta E_{SSTO} )$$

For nuclei, the $\Delta E$ in brackets can be considered for accuracy summing up to the left obligatory but leaving out to the right possible.

$$E_{Tr} = E_P + \Delta E_A \; ( + \Delta E_{MM} + \Delta E_{SSTO} )$$

For atoms, the $\Delta E$ in brackets as before. Hyperfine structure is considered as a part of $\Delta E_A$.

$$E_{Tr} = E_P + \Delta E_{MM} \; ( + \Delta E_{SSTO} )$$

For (macro)molecules, $\Delta E_{SSTO}$ can be considered for accuracy.

$$E_{Tr} = E_P + \Delta E_{SSTO}$$

For solid state objects.

All the energy-differences of the total energies as in the equations can be taken as the $E_{ch}$ but also the energy-differences of the kinetic energies or the energy-differences according to $mc^2$ with v=0. Also a mixed sum is possible. $\alpha$-particles must be considered as nuclei because of strong interaction after. $e^-$ , $e^+$, $\nu_e$, $\underline{\nu}_e$ , $\gamma$ of course not.
So for the transition $N_{Start}$ ==> $N_{End}$ + $\alpha$ the situation between $N_{End}$ and $\alpha$ is symmetrical, both $|\Delta E|$ are possible:

$$\Delta E_N = E_{NStart} - E_{NEnd}$$

$$\Delta E_\alpha = E_{NStart} - E_\alpha$$

Atoms, (macro)molecules or solid state objects also can be chosen in differences of energy because they have strong interaction as a part of their total quantum state.

But $e^-$ , $e^+$, $\nu_e$, $\nu_e$, $\gamma$ can not be a successor of a quantum state with strong interaction. Here quality of interaction is crucial and not relativity despite mass.

In the case of nuclei:
The probability of two transitions with origin in the same quantum state $\overline{A}$ with the same $E_{Tr}$ is very low. This means the transition energy $E_{Tr}$ can be chosen as $E_{ch}$ in most cases.

If there really is a confusion (equality or both a factor equality to $E_{H2}$) of the two $E_{Tr1}$ and $E_{Tr2}$ out of the same origin quantum state then $E_{Tr}$ must not be chosen as $E_{ch}$ in the following:

a) $\alpha$-radiation
a0) energy of the transition
a1) $\alpha$-particle with total energy $E_\alpha = (m_\alpha^2 c^4 + p_\alpha^2 c^2)^{1/2}$
a2) $\alpha$-particle with kinetic energy
a3) $\alpha$-particle's energy according to $m_\alpha c^2$, v=0 alone
a4) nucleus after $\alpha$-decay in total energy
a5) nucleus after $\alpha$-decay in kinetic energy
a6) nucleus after $\alpha$-decay in energy $m_N c^2$, v=0
a1) - a6) are the resulting energies
a7) $\alpha$-particle difference in total energy $\Delta E_{t\alpha} = E_{tNst} - E_{t\alpha}$
a8) $\alpha$-particle difference in kinetic energy $\Delta E_{kin\alpha} = E_{kinNst} - E_{kin\alpha}$
a9) $\alpha$-particle difference in energy m $c^2$, v=0 : $\Delta E_\alpha = E_{Nst} - E_\alpha$
a10) nucleus difference in total energy $\Delta E_{tN} = E_{tNst} - Et_{Nend}$
a11) nucleus difference in kinetic energy $\Delta E_{kinN} = E_{kinNst} - E_{kinNend}$
a12) nucleus difference in energy m $c^2$, v=0 : $\Delta E_N = E_{Nst} - E_{Nend}$
a7) - a12) are the difference energies
b) $\beta$ - radiation $e^-$ emitted
b0) energy of the transition $E_{\beta\text{-}Tr}$
b1) $e^-$ with total energy
b2) $e^-$ with kinetic energy
b3) $e^-$ with energy according to $m_e c^2$, v=0
b4) electron-antineutrino with total energy
b5) electron-antineutrino with kinetic energy
b6) electron-antineutrino with energy m $c^2$, v=0
b7) nucleus after $\beta$-decay in total energy
b8) nucleus after $\beta$-decay in kinetic energy
b9) nucleus after $\beta$-decay in energy m $c^2$, v=0
b1) - b9) are the resulting energies
b10) difference of the total energies of nuclei $\Delta E_{tN} = E_{tNst} - Et_{Nend}$
b11) difference of the kinetic energies of nuclei $\Delta E_{kinN} = E_{kinNst} - E_{kinNend}$
b12) difference of the energies m $c^2$, v=0 of nuclei $\Delta E_N = E_{Nst} - E_{Nend}$
b10) - b12) are the difference energies
c) positron $e^+$ in $\beta$ - decay emitted
c0) energy of the transition $E_{Tr}$
c1) $e^+$ with total energy
c2) $e^+$ with kinetic energy
c3) $e^+$ with energy according to m $c^2$, v=0
c4) electron-neutrino $v_e$ with total energy
c5) electron-neutrino $v_e$ with kinetic energy
c6) electron-neutrino $v_e$ with energy according to m $c^2$, v=0
c7) nucleus after $\beta$-decay in total energy
c8) nucleus after $\beta$-decay in kinetic energy
c9) nucleus after $\beta$-decay in energy m $c^2$, v=0
c1) - c9) are the resulting energies
c10) difference of the total energies of nuclei $\Delta E_{tN} = E_{tNst} - Et_{Nend}$
c11) difference of the kinetic energies of nuclei $\Delta E_{kinN} = E_{kinNst} - E_{kinNend}$
c12) difference of the energies m $c^2$, v=0 of nuclei $\Delta E_N = E_{Nst} - E_{Nend}$
c10) - c12) are the difference energies
d)$\beta$ - decay with absorption of an $e^-$
d0) energy of the transition $E_{Tr}$
d1) nucleus after $\beta$-decay in total energy
d2) nucleus after $\beta$-decay in kinetic energy
d3) nucleus after $\beta$-decay in energy m $c^2$, v=0
d4) electron-neutrino $v_e$ with total energy
d5) electron-neutrino $v_e$ with kinetic energy

d6) electron-neutrino $v_e$ with energy according to m $c^2$, v=0
d7) atom after β-decay in total energy
d8) atom after β-decay in kinetic energy
d9) atom after β-decay in energy m $c^2$, v=0
d1) - d9) are the resulting energies
d10) difference of the total energies of nuclei $\Delta E_{tN} = E_{tNst} - Et_{Nend}$
d11) difference of the kinetic energies of nuclei $\Delta E_{kinN} = E_{kinNst} - E_{kinNend}$
d12) difference of the energies m $c^2$ , v=0 of nuclei $\Delta E_N = E_{NSt} - E_{Nend}$
d13) difference of the total energies of atoms $\Delta E_{tA} = E_{tAst} - E_{tAend}$
d14) difference of the kinetic energies of atoms $\Delta E_{kinA} = E_{kinAst} - E_{kinAend}$
d15) difference of the energies m $c^2$, v=0 of atoms $\Delta E_A = E_{Ast} - E_{Aend}$
d10) - d15) are the difference energies
e) γ - radiation
e0) energy of the transition $E_{Tr}$
e1) energy of the photon γ $E = h\, v_\gamma$
e2) nucleus after γ-decay in total energy
e3) nucleus after γ -decay in kinetic energy
e4) nucleus after γ -decay in energy m $c^2$, v=0
e1) - e4) are the resulting energies
e5) difference of the total energies of nuclei $\Delta E_{tN} = E_{tNst} - Et_{Nend}$
e6) difference of the kinetic energies of nuclei $\Delta E_{kinN} = E_{kinNst} - E_{kinNend}$
e7) difference of the energies m $c^2$, v=0 of nuclei $\Delta E_N = E_{NSt} - E_{Nend}$
e5) - e7) are the difference energies

It must be stressed that the helper radiation $E_{H2} = h\, V_{H2}$ supplies an attractor for all $E_{ch}$ (chosen energies) with $E_{ch} = n \cdot E_{H2}$ or $E_{ch} = s \cdot E_{H2}$. Any transition that is possible according to these conditions will be increased in transition probability (/will be driven). If it is a photon or phonon with v = c sent out in this transition there are real frequency $v_{ch}$ with $E_{ch} = h \cdot v_{ch}$ and real wavelength $\lambda_{ch}$ with $\lambda_{ch} = c / v_{ch}$ according to $c = v_{ch} \cdot \lambda_{ch}$.

In the case that $E_{ch}$ is an energy of another kind (not of a photon or phonon with v=c), an energy of a particle (with mass) in velocity < c, the both $v_{ch}$ and $\lambda_{ch}$ are virtual and provide an attractor via the energy, but the condition on $\lambda_{H2} = n \cdot \lambda_{oh}$ or $\lambda_{H2} = s \cdot \lambda_{ch}$

$\Lambda_{H2}$ wavelength of the driving helper
$\lambda_{ch}$ wavelength of the virtual photon or the virtual phonon with v=c
$\lambda_m$ wavelength of the particle

is useless because $\lambda_m = \lambda_{ch}$
fails because of

$$E_{tm}{}^2 = m_m{}^2 \cdot c^4 + p_m{}^2 \cdot C^2 \quad p_m{}^{>} = \cdot\, km^{>} \quad km = 2\pi / \lambda_m \quad \lambda_m = 2\pi / k_m$$

So there is only one attractor according to the condition on the energy. But for real $v_{ch}$ and $\lambda_{oh}$ as in the case of a photon or speed-c phonon as the driven particle in question for the driven transition there are both attractors: $E_{ch}$ and $\lambda_{ch}$.

The photon or phonon transition is therefore increased in probability instead of any transition with other particles as a result if they rule out each other. Rule out each other means the origin is in the same quantum state and the energies are equal or both in a factor to $E_{H2}$ as described. For huge n, $l_s$, $j_s$ for the photon or the phonon with speed c and perfect little n, $l_s$, $j_s$ for a particle (with mass) in velocity < c the situation might change due to the experiment. Also in less accuracy for the two attractor-photon or -phonon.

But once $\lambda_m$ is given it is possible to apply a helper radiation with

$$\lambda_{H2} = n - \lambda_m \quad v_{H2} = c / \lambda_{H2} \quad E_{H2} = h \cdot V_{H2}$$

that in converse lacks the condition on the energy for a particle (with mass) in speed < c. So again only one attractor as before for these particles. The situation is the same as explained on the page before, a transition with two attractors is preferred as stated there with the restriction on factors and accuracy.

The result if both a photon or a phonon transition with v=c of the same or factor matching energy is possible

is due to the experiment with the presumption on the helper particles in the applied radiation: Photon radiation will cause a photon emission, phonons applied will cause a phonon emission if they rule out each other (origin in the same quantum state $\lambda$ and both energies factor equal to the helper $H_2$ ). But it should be possible due to experiments to drive photons with phonons of speed c and phonons with photons if they don't rule out each other.

The explanations so far are for increasing a transition probability / driving a transition and are claimed in the class A) in the claim of the same title and AnmNr EP 22 000 032.7 .

It is possible to drive a direction of a resulting particle of a transition in addition if two beams are applied in the way described in the following. Therefore it is necessary to choose a single particle to be driven because only then a direction makes sense according to the conservation of momentum.

The general case of B) :

I) Photons and phonons as driven particles only, $E_{ch}$ given and $\nu_{ch}$, $\lambda_{ch}$ both real. Both beams must be in the same incoming direction and fulfill these conditions:

a) $E_{H1} = h\ v_{H1}$

$$E_{H2} = h\ v_{H2} = m'\ E_{H1} = m'\ h\ v_{H1}$$

$$E_{ch} = h\ v_{ch} = n\ E_{H2} = n\ h\ V_{H2} = n\ m'\ E_{H1} = n\ m'\ h\ v_{H1}$$

$$\lambda_{H1} = m'\ \lambda_{H2} = m'\ n\ \lambda_{ch}$$

b) $E_{H1} = h\ v_{H1}$

$$E_{H2} = h\ V_{H2} = r\ E_{H1} = r\ h\ v_{HL}$$

$$E_{ch} = h\ v_{ch} = s\ E_{H2} = s\ h\ v_{H2} = s\ r\ E_{H1} = s\ r\ h\ v_{H1}$$

$$\lambda_{H1} = r\ \lambda_{H2} = r\ s\ \lambda_{ch}$$

if both r, s are of $r = l_r / j_r$ and $s = l_s / j_s$ with little natural numbers $l_r$, $j_r$, $l_s$, $j_s$ then best, of course $l_r > j_r$ and $l_s > j_s$.

c) If this b) holds due to an experiment then the following is obvious, otherwise the following is suggested as a weaker attempt.

$$E_{H1} = h\ v_{H1}\ l > n$$

$$E_{H2} = h\ v_{H2} = m'\ E_{H1} = m'\ h\ v_{H1}$$

$$E_{ch} = h\ v_{ch}, = n\ E_{H2} = n\ h\ v_{H2} = |\ E_{H1} = |\ h\ v_{H1}$$

$$\lambda_{H2} = n\ \lambda_{ch}$$

$$\lambda_{H1} = m'\ \lambda_{H2} = l\ \lambda_h$$

II) In the case here the energy chosen $E_{ch}$ is a single energy characteristic for a particle (with mass) in veloity < c. If a sum containing energies of two or more resulting particles is taken only the class A) of claims is possible. The considered particles lack $c = v \cdot \lambda$ so that there is only one condition and this on energy as an attractor.

a) $E_{H1} = h\ v_{H1}$

$$E_{H2} = h\ v_{H2} = m'\ E_{H1} = m'\ h\ v_{H1}$$
$$E_{ch} = n\ E_{H2} = n\ h\ v_{H2} = n\ m'\ EH_1 = n\ m'\ h\ v_{H1}$$

No condition on wavelength $\lambda$, $\lambda_{ch}$ is virtual.

b) $E_{H1} = h\ v_{H1}$

$E_{H2} = h\, v_{H2} = r\, E_{H1} = r\, h\, v_{H1}$

$E_{ch} = s\, E_{H2} = s\, h\, v_{H2} = s\, r\, E_{H1} = s\, r\, h\, v_{H1}$

No condition on wavelength $\lambda$, $\lambda_{ch}$ is virtual.

c) If this b) holds due to an experiment then the following is obvious, otherwise the following is suggested as a weaker attempt.

$E_{H1} = h\, _{VH1}\, l > n$

$E_{H2} = h\, v_{H2} = m'\, E_{H1} = m'\, h\, v_{H1}$

$E_{ch} = n\, E_{H2} = n\, h\, v_{H2} = |\, E_{H1} = |\, h\, v_{H1}$

No condition on wavelength $\lambda$, $\lambda_{ch}$ is virtual.

III) In the case here the start is a wavelength $\lambda_m$ of a single particle resulting in the transition so because of the lack of $c = v\, \lambda$ there is only a condition on the wavelength (A) and B)). A nucleus, atom or (macro)molecule may be chosen as the "single particle", means here only one. If a solid state object's $\lambda_m$ is possible then this could be chosen too.

a)

$$E_m^2 = m_m^2\, c^4 + p_m^2\, c^2 \qquad p_m^{>} = k_m^{>} \qquad \lambda_m = 2\pi / km$$
$$\lambda_{H2} = n\, \lambda_m \qquad V_{H2} = c / \lambda_{H2} \qquad E_{H2} = h\, v_{H2}$$
$$\lambda_{H1} = m'\, \lambda_{H2} = m'\, n\, \lambda_m \qquad v_{H1} = c / \lambda_{H1} \qquad E_{H1} = h\, v_{H1}$$
$$E_{H2} = m'\, E_{H1}$$

b)

$$E_m^2 = m_m^2\, c^4 + p_m^2\, c^2 \qquad p_m^{>} = k_m^{>} \qquad \lambda_m = 2\pi / k_m$$
$$\lambda_{H2} = s\, \lambda_m \qquad v_{H2} = c / \lambda_{H2} \qquad E_{H2} = h\, v_{H2}$$
$$\lambda_{H1} = r\, \lambda_{H2} = r\, s\, \lambda_m \qquad v_{H1} = c / \lambda_{H1} \qquad E_{H1} = h\, v_{H1}$$
$$E_{H2} = h\, v_{H2} = r\, E_{H1} = r\, h\, v_{H1}$$

c) If this b) holds due to an experiment then the following is obvious, otherwise the following is stated as a weaker attempt.

$$E_m^2 = m_m^2\, c^4 + p_m^2\, c^2 \qquad p_m^{>} = k_m^{>} \qquad \lambda_m = 2\pi / k_m$$
$$\lambda_{H2} = n\, \lambda_m \qquad v_{H2} = c / \lambda_{H2} \qquad E_{H2} = h\, v_{H2}$$
$$\lambda_{H1} = m'\, \lambda_{H2} = l\, \lambda_m \qquad v_{H1} = c / \lambda_{H1} \qquad E_{H1} = h\, v_{H1}$$
$$E_{H2} = h\, v_{H2} = m'\, E_{H1} = m'\, h\, v_{H1}$$

in the case B) of two beams for direction we get depending on the accuracy of m' , n , | or r, s pictured in best accuracy a) and least accuracy f)

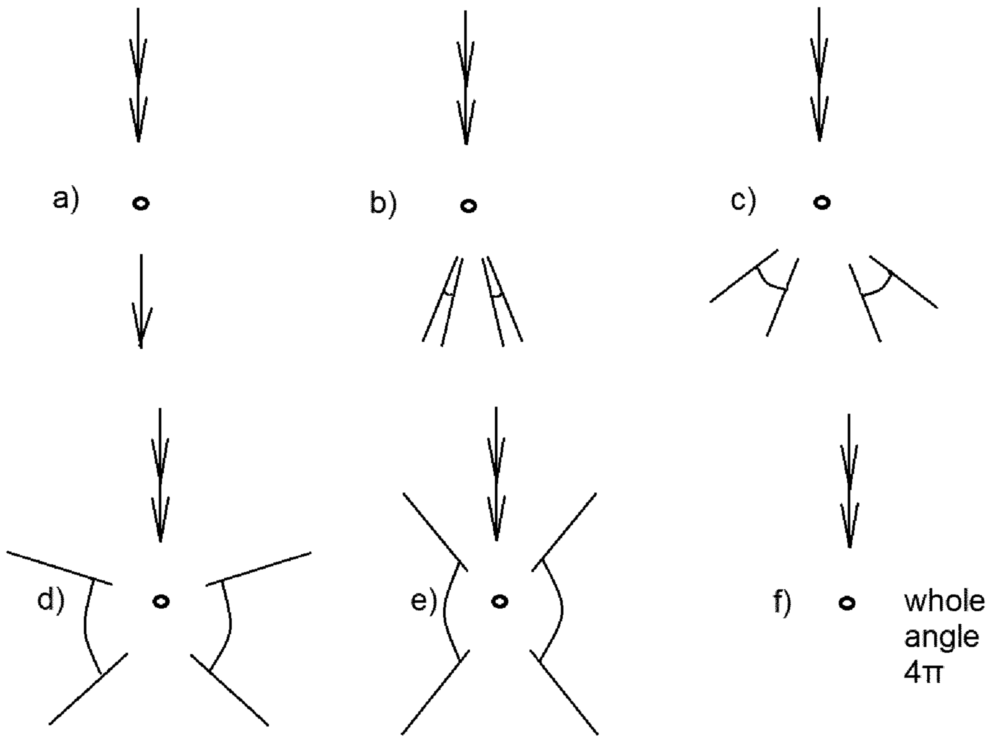


a) - f) are all with cylindrical symmetry to the incoming beams.

Example 1 : X-ray or Auger electron

An atom with a missing electron in a K-orbital is the start and a X-ray photon should be driven (increased in transition probability) which is the result of a transition from an orbital L to K($e^-$):

$$E_{LK} = \Delta E_{tA} + E_{\gamma} \qquad\qquad p_{ASt}^{>} = p_{\gamma}^{>} + p_{AEnd}^{>}$$

Both the remaining atom ($\Delta E_{tA}$) and the X-ray photon ($E_{\gamma}$) take a part of the energy of the orbital change of the $e^-$ ($E_{LK}$). So if $E_{H2}$ (and $E_{H1}$) are applied as in case I) with $E_{ch} = E_{\gamma}$ then the transition probability will be increased (and the X-ray-photon will be emitted in the direction of $E_{H2}$ and $E_{H1}$ if they have both the same direction).

It is also possible to choose one of 6 energies of the atom:

Differences in total, kinetic and $m_A c^2$ - energies
Resulting energies (total, kinetic and $m_A c^2$)

If one of them is taken as $E_{ch}$ then the transition probability will be increased because of $E_{H2}$ ( II) ) and also the direction of the atom will be enforced according to two beams of $E_{H2}$ and $E_{H1}$ ( II) ). It must be stressed that the direction can only be chosen according to the conservation of momentum.

If the probability of an Auger-electron-transition out of an arbitrary M-orbital is to be increased then the following energies can be chosen as $E_{ch}$ :

$$E_{LK} = E_{ME} + E_{ekin} + m_e c^2 + \Delta E_{tA}$$

$E_{ME}$ energy from M-orbital to the edge where $e^-$ is free

$E_{ekin}$ kinetic energy of $e^-$ (Auger-electron)

$m_e c^2$ energy of $e^-$ according to mass

$$E_{ekin} + m_e c^2$$

These four can be taken in the properties of the Auger-electron.

On the other hand again 6 energies can be chosen for the atom as before but according to this Auger-transition: Differences in total, kinetic and $m_A c^2$ -energies

Resulting energies (total, kinetic and $m_A c^2$)

If one of these 10 possibilities is chosen for $E_{ch}$ then this transition-probability will be increased in applying $E_{H2}$ alone. If $E_{H2}$ and $E_{H1}$ are both applied in the same direction for one of the four electron-energies then the direction of the electron can be enforced in this direction. For $E_{ME}$ this is easy because there is no condition on momentum. For the other three:

$$P_{Ast}^{>} = p_{e-}^{>} + p_{AEnd}^{>}$$

$$E_{LK} = E_{ME} + E_{kine-} + m_{e-} \cdot c^2 + \Delta E_{tA}$$

| | |
|---|---|
| $\Delta E_{tA}$ | total energy difference of the atom in transition |
| $P_{Ast}{>}$ | momentum of the atom before the start of transition |
| $P_{AEnd}^{>}$ | momentum of the atom after the end of transition |
| $p_{e}^{->}$ | momentum of $e^-$ |

$$\Delta E_{tA} = E_{tASt} - E_{tAEnd}$$

$Et_{Ast}^2 = m_{Ast}^2 c^4 + {}_{pAst}^2 c^2$ total energy of atom before start

$Et_{AEnd}^2 = m_{AEnd}^2 c^4 + p_{AEnd}^2 c^2$ total energy of atom after end

These equations are also crucial for $E_{ch}$ to be one of the 6 energies of the atom. If $E_{H2}$ and $E_{H1}$ are both applied in one direction then the atom will have this direction after the transition if the conservation of the momentum is part of the solution.

Example 2 : Nucleus in a state from where both $\alpha$-decay and $\gamma$-decay are possible.

In most cases the energies of the two transitions differ and are not even factor equal to an helper energy $E_{H2}$. If this is valid then both $E_{Tr\alpha}$ and $Er_{r\gamma}$ can be chosen to increase the probability of the transition but not to have a certain direction as a result of applying $E_{H2}$ and $E_{H1}$.

So $E_{ch} = E_{Tr\alpha}$ with $E_{H2}$ for $\alpha$-decay

and $E_{ch} = E_{Tr\gamma}$ with $E_{H2}$ for $\gamma$-decay

in both cases II) is crucial

For driving the $\alpha$-decay:

$E_{ch}$ can be

Difference of total, kinetic, or $m_N \cdot c^2$ energy of the nucleus before and after

Resulting total, kinetic or $m_N \cdot c^2$ energy of the nucleus after

Difference of total, kinetic, or $m_\alpha \cdot c^2$ energy of the $\alpha$-particle before and after

(The "a-particle before" is the origin nucleus)

Resulting total, kinetic or $m_\alpha \cdot c^2$ energy of the $\alpha$-particle (after)

There are these 12 possibilities but all according to the conservation of energy and momentum.

$$\Delta E_{Tr\alpha} = E_{tNSt} - E_{tNEnd} - E_{t\alpha End}$$

$$p_{Nst}^{>} = p_{\alpha}^{>} + p_{NEnd}^{>}$$

The total energies are

$E_{tNst}^2 = m_{Nst}^2 c^4 + p_{Nst}^2 c^2$ total energy of nucleus before start
$Et_{NEnd}^2 = m_{NEnd}^2 c^4 + p_{NEnd}^2 c^2$ total energy of nucleus after end
$Et_{\alpha End}^2 = m_{\alpha End}^2 c^4 + p_{\alpha End}^2 c^2$ total energy of $\alpha$-particle

For driving the $\gamma$-decay $E_{ch}$ can be the following energies:

$E_{\gamma} = h\, v_{\gamma}$ energy of the $\gamma$-particle

Difference of total, kinetic or $m_N c^2$ energy of the nucleus before and after
Resulting total, kinetic or $m_N c^2$ energy of the nucleus after

$$\Delta E_{Tr\gamma} = E_{tNSt} - E_{tNEnd} - E_{\gamma}$$

$$p_{Nst}^{>} = p_{\gamma}^{>} + p_{NEnd}^{>}$$

$$p^{>} = \hbar\, k^{>}$$

As before there can be $E_{H2}$ and $E_{H1}$ according to the $E_{ch}$ in question, the $E_{ch}$ particle will be sent out in the certain direction of the both $E_{H2}$ and $E_{H1}$ beams if the conservation of the momentum is part of the solution, this for the nucleus in both cases and for the $\alpha$- and $\gamma$-particles in case of their decay.
In this case and also if only $E_{H2}$ is applied the probability of the certain transition(decay) will be increased. The result is a kind of decrease of the transition-probability of the other decay because of the header of the example , both decays have their origin in the same quantum state. The energies $E_{tNSt}$ and $E_{tNEnd}$ have the same description in both $\alpha$- and $\gamma$-decay but of course denote totally different values or ranges of values according to the start in kinetic energy and therefore total energy and momentum $E_{tNSt}$, $p_{NSt}^{>}$.

Example 3 : Xray-fluorescence analysis

a1) characteristic radiation of anode-element

If $E_{LK}$ is the energy for an electron's changing from an L- to a K-orbital , then in most cases it is the energy of a sent out X-ray-photon, otherwise the energy-difference of the rest of the atom has to be considered:

$$E_{LK} = \Delta E_{tA} + E_{\gamma}$$

as in example 1.
Then $E_{\gamma}$ is $E_{ch}$, and applying $E_{H2}$ and $E_{H1}$ beams will increase the probability of the transition and also cause the X-ray-photons to be emitted in the direction of the beams.
a2) In the same way a frequency of the continuous spectrum can be stressed (higher probability and a beam instead of arbitrary direction). The radiation in decreasing velocity of $e^-$ will be in higher probability in $E_{ch}$ and directed because of $E_{H2}$ and $E_{H1}$ .
a3) If $E_{KE}$ is the energy from a K-orbital to the edge of an energy area where the $e^-$ is free in the metal it is possible to increase the probability of a K-$e^-$ to be stroke out: $E_{KE}$ can be $E_{ch}$ and $E_{H2}$ can cause this increased probability.

a1) and a3) will increase the frequency of $E_{LK}$-transitions in the anode.

b) Applying radiation to the probe element

If an $E_{LK}$ - transition should be measured the same as a1) with $E_{LK}$ as $E_{ch}$ or $E_{LK} = \Delta E_{tA} + E_{\gamma}$, $E_{\gamma}$ as $E_{ch}$ and applying $E_{H2}$ and $E_{H1}$ to increase the probability of the transition compared to others and also get a beam to the detector.

Furthermore there can be a higher probability to strike out the electrons of the K-orbital if $E_{KE}$ is taken as $E_{ch}$, $E_{KE}$ is the energy from the K-orbital to an energy-area where the $e^-$ is free in the metal or to the edge if the probe is no metal.

c) Detector to be driven by solid state physics

The detector is a semiconductor in most cases, $\Delta E_{wanted}$ is $E_{ch}$, and $E_{H2}$ is applied as photons or phonons with speed c.

## Claims

1. The physical principle is the claim, but at least the following subjects :

   1) Xray
   2) Auger-electrons
   3) nuclei ( especially $\alpha$- radiation, $\beta$- radiation, $\gamma$-radiation )
   4) LASER
   5) Anode ( characteristic radiation, radiation because of change of the direction or speed of electrons )
   6) all other particles' radiation because of change of direction or velocity
   7) Probe (for Gamma-spectroscopy, Xray-fluorescence analysis, neutron-activation-analysis and other applications)
   8) solid state physics

      a) semiconductors
      b) (quantum physical) Hall effect
      c) diamagnetism, paramagnetism, ferromagnetism

   9) spin of nuclei resonance tomography (magnet resonance tomography)
   10) photoelectric effect
   11) Compton effect
   12) supra-conduction (Cooper-pairs)
   13) Xray-computer-tomography
   14) devices for better hearing, headphones, headsets, membrane similar devices, microphone
   15) atom-absorption-analysis

Europäisches Patentamt
European Patent Office
Office européen des brevets

# DECLARATION

which under Rule 63 of the European Patent Convention shall be considered, for the purposes of subsequent proceedings, as the European search report

Application Number
EP 22 00 0032

| The Search Division considers that the present application, does not comply with the provisions of the EPC to such an extent that it is not possible to carry out a meaningful search into the state of the art on the basis of all claims | CLASSIFICATION OF THE APPLICATION (IPC) |
|---|---|
| Reason:<br><br>The pages filed on 19.04.2022 do not appear to comprise a coherent set of claims according to any possible interpretation of the requirements of the EPC. As such, it is impossible to to determine the subject-matter which is to be searched at this time. Additionally, the description and the pages comprising the claims appear to be merely stating various scientific theories which would not be patentable according to Article 52(2)(a) EPC.<br><br>The applicant's attention is drawn to the fact that a search may be carried out during examination following a declaration of no search under Rule 63 EPC, should the problems which led to the declaration being issued be overcome (see EPC Guideline C-IV, 7.2). | INV.<br>G01N23/00<br>G01N37/00 |

1

| Place of search | Date | Examiner |
|---|---|---|
| The Hague | 19 January 2023 | Savage, John |

EPO FORM 1504 (P04F37)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 22000032 A